# EUROPEAN PATENT APPLICATION

(11) **EP 4 582 294 A1**
(43) Date of publication of application: **09.07.2025**
(21) Application number: 23858970.9
(22) Date of filing: 19.07.2023
(51) Int. Cl.: B60L 53/00, H02H 9/02

(54) **CHARGER, CHARGER CONTROL METHOD, AND VEHICLE**

(30) Priority: 30.08.2022 CN 202211050020
(71) Applicant: BYD Company Limited, Shenzhen, Guangdong 518118 (CN)
(72) Inventor: LIU, Weidong, Shenzhen, Guangdong 518118 (CN); WANG, Chao, Shenzhen, Guangdong 518118 (CN); WANG, Xinghui, Shenzhen, Guangdong 518118 (CN)
(74) Representative: Mathys & Squire
(86) International application number: PCT/CN2023/108245
(87) International publication number: WO 2024/045934

(57) **Abstract**

A charger, comprising a controller (1), an alternating-current-side capacitor assembly (2), a power factor correction circuit (3), a bus capacitor assembly (4), and a DC-DC converter (5). The bus capacitor assembly (4) comprises a first capacitor (C1) and a second capacitor (C2). The alternating-current-side capacitor assembly (4) is connected to both the first capacitor (C1) and the second capacitor (C2). When the charger is in a single-phase alternating-current charging mode, the controller (1) is used to dynamically adjust an on-duty ratio of a high-frequency bridge arm of the power factor correction circuit (3) according to the voltage of an alternating current, so as to discharge the voltage of the alternating-current-side capacitor assembly (4), perform power factor correction on the alternating current, and input a direct current outputted from the power factor correction circuit to the DC-DC converter (5). Also provided are a charger control method and a vehicle.

## Description

### CROSS-REFERENCE TO RELATED APPLICATIONS

The present disclosure claims priority to Chinese Patent Application No. 202211050020.0, filed on August 30, 2022 and entitled "CHARGER, CHARGER CONTROL METHOD, AND VEHICLE". The entire content of the above-referenced application is incorporated herein by reference.

### FIELD

The present disclosure relates to the field of power electronic technologies, and more specifically, to a charger, a charger control method, and a vehicle.

### BACKGROUND

A charger is a power system that converts an alternating current (AC) into a direct current (DC), and generally includes a power factor correction (PFC) circuit at a front end and a DC-DC converter at a rear end. A bus capacitor configured to balance an instantaneous power difference between an AC side and a DC side is arranged between them. A common mode current leakage problem occurs in the charger during operation. Therefore, a bus capacitor and an AC-side capacitor have been added to the charger. A midpoint of the bus capacitor is short-circuited to a midpoint of the AC-side virtual capacitor to alleviate the common mode current leakage problem during three-phase charging. However, short-circuiting of the midpoint of the bus capacitor to the midpoint of the AC-side virtual capacitor introduces a new problem. For example, when the charger is in a single-phase AC charging mode, distortion occurs in an input current when an input voltage crosses zero. In other words, when the input voltage crosses zero, the current either has a large positive pulse peak or a large negative pulse peak, or a current waveform is severely distorted and cannot follow the input voltage well.

### SUMMARY

To overcome a problem existing in the related art, the present disclosure provides a charger, a charger control method, and a vehicle.

To achieve the above object, according to a first aspect, the present disclosure provides a charger, including an alternating current-side (AC-side) capacitor assembly, a power factor correction (PFC) circuit, a direct current-direct current (DC-DC) converter, a bus capacitor assembly, and a controller.

One end of the AC-side capacitor assembly is adapted to connect to an AC power supply.

A first end of the PFC circuit is configured to connect to the AC power supply and the end of the AC-side capacitor assembly.

The bus capacitor assembly includes a first capacitor and a second capacitor.

One end of the first capacitor is connected to both a second end of the PFC circuit and one end of the DC-DC converter.

One end of the second capacitor is connected to another end of the first capacitor. Another end of the second capacitor is connected to both a third end of the PFC circuit and another end of the DC-DC converter.

The controller is connected to both the PFC circuit and the DC-DC converter, and is configured to dynamically adjust a conduction duty cycle of a high-frequency bridge arm of the PFC circuit based on a voltage of the AC power supply, to discharge a voltage of the AC-side capacitor assembly and perform PFC on the AC power supply when the charger is in a single-phase AC charging mode, and input a DC outputted from the PFC circuit to the DC-DC converter, to enable the DC-DC converter to perform voltage conversion on the DC and output the DC to a to-be-charged device.

The other end of the first capacitor and the end of the second capacitor are both connected to another end of the AC-side capacitor assembly.

Optionally, the PFC circuit includes M-phase high-frequency bridge arms, M coils, and a power frequency bridge arm.

A first bus terminal of the M-phase high-frequency bridge arms is connected to the first capacitor. A second bus terminal of the M-phase high-frequency bridge arms is connected to the second capacitor.

First ends of the M coils are connected to midpoints of the M-phase high-frequency bridge arms in a one-to-one correspondence manner. Second ends of the M coils are connected to a live wire of the AC power supply.

One end of the power frequency bridge arm is connected to both the first bus terminal and the first capacitor. Another end of the power frequency bridge arm is connected to both the second bus terminal and the second capacitor. A midpoint of the power frequency bridge arm is configured to connect to a neutral wire of the AC power supply.

M ≥ 1, and the AC-side capacitor assembly includes M third capacitors. First ends of the M third capacitors are connected to the second ends of the M coils in a one-to-one correspondence manner. Second ends of the M third capacitors are connected together to form a neutral point. The neutral point is connected to both the first capacitor and the second capacitor through a resistor.

Optionally, the controller is connected to the M-phase high-frequency bridge arm, and is configured to:
control a target high-frequency bridge arm to turn off if an absolute value of the voltage of the AC power supply is less than or equal to a first preset voltage, where the target high-frequency bridge arm includes one or more high-frequency bridge arms used in the single-phase AC charging mode;
control, if the voltage is greater than the first preset voltage and less than a second preset voltage, an upper bridge arm of the target high-frequency bridge arm to turn off and a lower bridge arm to turn on at a first duty cycle to discharge the voltage of the AC-side capacitor assembly, and control, if the voltage is greater than the second preset voltage, the lower bridge arm to turn on at a second duty cycle to perform the PFC on the AC power supply when an input voltage of the charger is in a positive half period, where the first preset voltage is less than the second preset voltage; and
control, if the absolute value of the voltage is greater than the first preset voltage and less than the second preset voltage, the lower bridge arm of the target high-frequency bridge arm to turn off and the upper bridge arm to turn on at the first duty cycle to discharge the voltage of the AC-side capacitor assembly, and control, if the absolute value of the voltage is greater than the second preset voltage, the upper bridge arm of the target high-frequency bridge arm to turn on at the second duty cycle to perform the PFC on the AC power supply when the input voltage of the charger is in a negative half period.

Optionally, the controller is further configured to:
control the upper bridge arm and the lower bridge arm of the target high-frequency bridge arm to alternately turn on after the lower bridge arm of the target high-frequency bridge arm is continuously turned on at the second duty cycle for preset duration; and
control the upper bridge arm and the lower bridge arm of the target high-frequency bridge arm to alternately turn on after the upper bridge arm of the target high-frequency bridge arm is continuously turned on at the second duty cycle for the preset duration.

Optionally, the target high-frequency bridge arm includes multiple high-frequency bridge arms.

The controller is configured to control the upper bridge arm of the target high-frequency bridge arm to turn off and the lower bridge arm to alternately turn on at a preset angle and the first duty cycle, and control the lower bridge arm of the target high-frequency bridge arm to turn off and the upper bridge arm to alternately turn on at the preset angle and the first duty cycle.

Optionally, the controller is connected to the power frequency bridge arm and is configured to control the lower bridge arm of the power frequency bridge arm to turn on and the upper bridge arm to turn off when the input voltage of the charger is in the positive half period, and control the upper bridge arm of the power frequency bridge arm to turn on and the lower bridge arm to turn off when the input voltage of the charger is in the negative half period.

According to a second aspect, the present disclosure provides a charger control method, including the following steps.

A conduction duty cycle of a high-frequency bridge arm of a PFC circuit is dynamically adjusted based on a voltage of an AC power supply, to discharge a voltage of an AC-side capacitor assembly and perform PFC on the AC power supply when a charger is in a single-phase AC charging mode.

ADC outputted from the PFC circuit is inputted to a DC-DC converter, to enable the DC-DC converter to perform voltage conversion on the DC and output the DC to a to-be-charged device.

The charger includes the AC-side capacitor assembly, the PFC circuit, a bus capacitor assembly, and the DC-DC converter. A first end of the PFC circuit is configured to connect to the AC power supply. The bus capacitor assembly includes a first capacitor and a second capacitor. One end of the first capacitor is connected to both a second end of the PFC circuit and one end of the DC-DC converter. Another end of the first capacitor is connected to one end of the second capacitor. Another end of the second capacitor is connected to both a third end of the PFC circuit and another end of the DC-DC converter. One end of the AC-side capacitor assembly is connected to both the AC power supply and the first end of the PFC circuit, and another end thereof is connected to both the first capacitor and the second capacitor.

Optionally, the PFC circuit includes M-phase high-frequency bridge arms, M coils, and a power frequency bridge arm, and M ≥ 1.

A first bus terminal of the M-phase high-frequency bridge arms is connected to the first capacitor. A second bus terminal of the M-phase high-frequency bridge arms is connected to the second capacitor. First ends of the M coils are connected to midpoints of the M-phase high-frequency bridge arms in a one-to-one correspondence manner. Second ends of the M coils are connected to a live wire of the AC power supply. One end of the power frequency bridge arm is connected to both the first bus terminal and the first capacitor, and another end thereof is connected to both the second bus terminal and the second capacitor. A midpoint of the power frequency bridge arm is configured to connect to a neutral wire of the AC power supply. The AC-side capacitor assembly includes M third capacitors. First ends of the M third capacitors are connected to the second ends of the M coils in a one-to-one correspondence manner. Second ends of the M third capacitors are connected together to form a neutral point. The neutral point is connected to both the first capacitor and the second capacitor through a resistor.

That a conduction duty cycle of a high-frequency bridge arm of a PFC circuit is dynamically adjusted based on a voltage of an AC power supply, to discharge a voltage of an AC-side capacitor assembly and perform PFC on the AC power supply includes the following steps.

A target high-frequency bridge arm is controlled to turn off if an absolute value of the voltage of the AC power supply is less than or equal to a first preset voltage. The target high-frequency bridge arm includes one or more high-frequency bridge arms used in the single-phase AC charging mode.

When an input voltage of the charger is in a positive half period, an upper bridge arm of the target high-frequency bridge arm is controlled to turn off and a lower bridge arm is controlled to turn on at a first duty cycle to discharge the voltage of the AC-side capacitor assembly if the voltage is greater than the first preset voltage and less than a second preset voltage, and the lower bridge arm is controlled to turn on at a second duty cycle to perform the PFC on the AC power supply if the voltage is greater than the second preset voltage. The first preset voltage is less than the second preset voltage.

When the input voltage of the charger is in a negative half period, the lower bridge arm of the target high-frequency bridge arm is controlled to turn off and the upper bridge arm is controlled to turn on at the first duty cycle to discharge the voltage of the AC-side capacitor assembly if the absolute value of the voltage is greater than the first preset voltage and less than the second preset voltage, and the upper bridge arm is controlled to turn on at the second duty cycle to perform the PFC on the AC power supply if the absolute value of the voltage is greater than the second preset voltage.

Optionally, the method further includes the following steps.

The upper bridge arm and the lower bridge arm of the target high-frequency bridge arm are controlled to alternately turn on after the lower bridge arm of the target high-frequency bridge arm is continuously turned on at the second duty cycle for preset duration.

The upper bridge arm and the lower bridge arm of the target high-frequency bridge arm are controlled to alternately turn on after the upper bridge arm of the target high-frequency bridge arm is continuously turned on at the second duty cycle for the preset duration.

According to a third aspect, the present disclosure provides a vehicle, including the charger provided in the first aspect of the present disclosure.

In the above technical solution, when the charger is in a single-phase AC charging mode, the conduction duty cycle of the high-frequency bridge arm of the PFC circuit is dynamically adjusted based on the voltage of the AC power supply, to discharge the voltage of the AC-side capacitor assembly and perform PFC on the AC power supply, and input the DC outputted from the PFC circuit to the DC-DC converter, to enable the DC-DC converter to perform voltage conversion on the DC and output the DC to a to-be-charged device. In this way, when the charger is in the single-phase AC charging mode, the conduction duty cycle of the high-frequency bridge arm of the PFC circuit is dynamically adjusted, so that the voltage of the AC-side capacitor assembly may be discharged, so as to prevent a current distortion from occurring when the AC crosses zero, and ensure an original PFC function.

Other features and advantages of the present disclosure are to be described in detail in the subsequent part of detailed description.

### BRIEF DESCRIPTION OF THE DRAWINGS

The accompanying drawings are intended to provide further understanding of the present disclosure and constitute a part of this specification. The accompanying drawings and the specific implementations below are used together for explaining the present disclosure rather than constituting a limitation on the present disclosure. In the drawings:
FIG. 1 is a structural block diagram of a charger according to an exemplary embodiment;
FIG. 2 is a topology diagram of a circuit of a charger according to an exemplary embodiment;
FIG. 3 is a topology diagram of a simplified circuit of a charger in a single-phase alternating current (AC) charging mode according to an exemplary embodiment; and
FIG. 4 is a flowchart of a charger control method according to an exemplary embodiment.

### DETAILED DESCRIPTION

Specific implementations of the present disclosure are described in detail below with reference to the accompanying drawings. It should be understood that the specific implementations described herein are merely used for describing and explaining the present disclosure, and are not intended to limit the present disclosure.

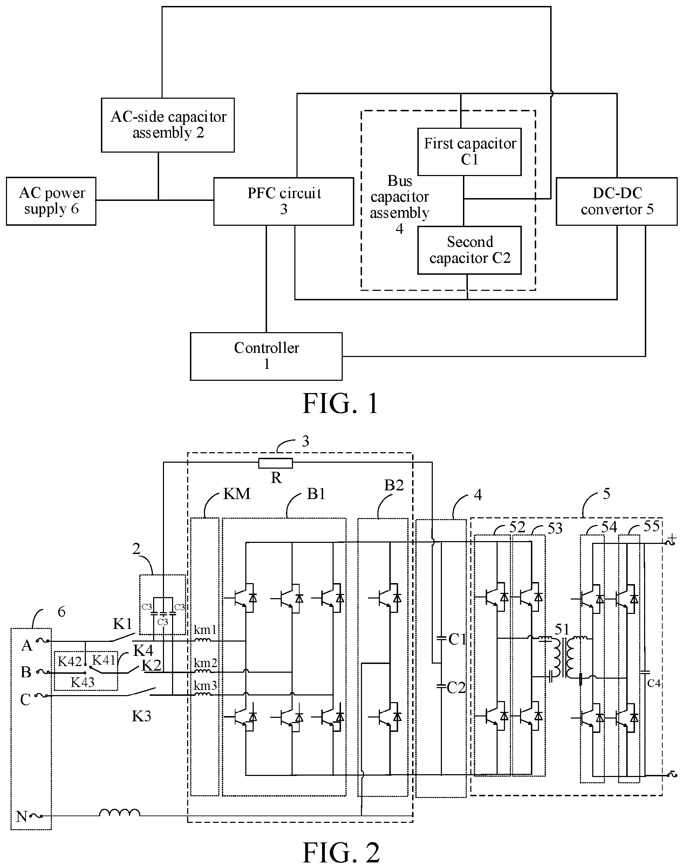

FIG. 1 is a structural block diagram of a charger according to an exemplary embodiment. As shown in FIG. 1, the charger includes a controller 1, an alternating current-side (AC-side) capacitor assembly 2, a power factor correction (PFC) circuit 3, a bus capacitor assembly 4, and a direct current-direct current (DC-DC) converter 5.

One end of the AC-side capacitor assembly 2 is adapted to connect to an AC power supply 6. A first end of the PFC circuit 3 is configured to connect to the AC power supply 6 and the end of the AC-side capacitor assembly 2.

The bus capacitor assembly 4 includes a first capacitor C1 and a second capacitor C2. One end of the first capacitor C1 is connected to both a second end of the PFC circuit 3 and one end of the DC-DC converter 5. One end of the second capacitor C2 is connected to another end of the first capacitor C1. Another end of the second capacitor C2 is connected to both a third end of the PFC circuit 3 and another end of the DC-DC converter 5. The other end of the first capacitor C1 and the end of the second capacitor C2 are both connected to another end of the AC-side capacitor assembly 2.

The controller 1 is connected to both the PFC circuit 3 and the DC-DC converter 5, and configured to: when the charger is in a single-phase AC charging mode, dynamically adjust a conduction duty cycle of a high-frequency bridge arm of the PFC circuit 3 based on a voltage of the AC power supply, to discharge a voltage of the AC-side capacitor assembly 2 and perform PFC on the AC power supply, and input a DC outputted from the PFC circuit 3 to the DC-DC converter 5, to enable the DC-DC converter 5 to perform voltage conversion on the DC and output the DC to a to-be-charged device. The to-be-charged device may be, for example, a power battery or a load. An AC may be a sinusoidal AC or a cosinoidal AC.

In the above technical solution, when the charger is in a single-phase AC charging mode, the conduction duty cycle of the high-frequency bridge arm of the PFC circuit is dynamically adjusted based on the voltage of the AC power supply, to discharge the voltage of the AC-side capacitor assembly and perform PFC on the AC power supply, and input the DC outputted from the PFC circuit to the DC-DC converter, to enable the DC-DC converter to perform voltage conversion on the DC and output the DC to a to-be-charged device. In this way, when the charger is in the single-phase AC charging mode, the conduction duty cycle of the high-frequency bridge arm of the PFC circuit is dynamically adjusted, so that the voltage of the AC-side capacitor assembly may be discharged, so as to prevent a current distortion from occurring when the AC crosses zero, and ensure an original PFC function.

As shown in FIG. 2, the above PFC circuit 3 may include M-phase high-frequency bridge arms B1, M coils KM, and a power frequency bridge arm B2, and M ≥ 1.

A first bus terminal of the M-phase high-frequency bridge arms B1 is connected to a first capacitor C1. A second bus terminal of the M-phase high-frequency bridge arms B1 is connected to a second capacitor C2. First ends of the M coils KM are connected to midpoints of the M-phase high-frequency bridge arms B1 in a one-to-one correspondence manner. Second ends of the M coils KM are connected to a live wire of an AC power supply 6 (as shown in FIG. 2, the M coils KM are respectively a coil km1, a coil km2, and a coil km3, where a second end of the coil km1 is connected to a live wire A of the AC power supply 6, a second end of coil km2 is connected to a live wire B of the AC power supply 6, and a second end of coil km3 is connected to a live wire C of the AC power supply 6). One end of the power frequency bridge arm B2 is connected to both the first bus terminal and the first capacitor C1. Another end of the power frequency bridge arm is connected to both the second bus terminal and the second capacitor C2. A midpoint of the power frequency bridge arm B2 is configured to connect to a neutral wire N of the AC power supply 6.

As shown in FIG. 2, the above AC-side capacitor assembly 2 includes M third capacitors C3. First ends of the M third capacitors C3 are connected to the second ends of the M coils KM in a one-to-one correspondence manner. Second ends of the M third capacitors C3 are connected together to form a neutral point. The neutral point is connected to both the first capacitor C1 and the second capacitor C2 through a resistor R.

As shown in FIG. 2, the above DC-DC converter 5 includes a transformer 51, a first phase bridge arm 52, a second phase bridge arm 53, a third phase bridge arm 54, a fourth phase bridge arm 55, and a fourth capacitor C4. A midpoint of the first phase bridge arm 52 is connected to a first end of a primary side of the transformer 51. A midpoint of the second phase bridge arm 53 is connected to a second end of the primary side of the transformer 51. A midpoint of the third phase bridge arm 54 is connected to a first end of a secondary side of the transformer 51. A midpoint of the fourth phase bridge arm 55 is connected to a second end of the secondary side of the transformer. A first bus terminal of the first phase bridge arm 52 and the second phase bridge arm 53 is connected to the first capacitor C1. A second bus terminal of the first phase bridge arm 52 and the second phase bridge arm 53 is connected to the second capacitor C2. A first bus terminal of the third phase bridge arm 54 and the fourth phase bridge arm 55 is connected to both one end of the fourth capacitor C4 and a positive electrode of a to-be-charged device. A second bus terminal of the third phase bridge arm 54 and the fourth phase bridge arm 55 is connected to both another end of the fourth capacitor C4 and a negative electrode of the to-be-charged device.

As shown in FIG. 2, the above charger may further include a first switch K1, a second switch K2, a third switch K3, and a fourth switch K4. The fourth switch K4 includes a movable end K41, a first fixed end K42, and a second fixed end K43. The movable end K41 is configured to selectively connect to the first fixed end K42 or the second fixed end K43.

In a case that the first switch K1, the second switch K2, and the third switch K3 are all closed, and the movable end K41 of the fourth switch K4 is connected to the second fixed end K43, the charger is in a three-phase AC charging mode.

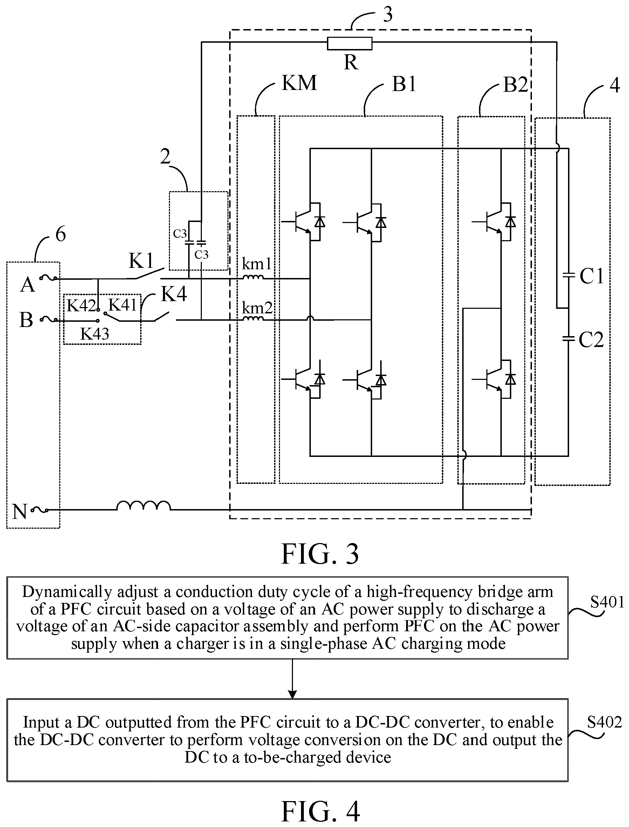

In a case that the first switch K1 is closed and the second switch K2 and the third switch K3 are both opened, or the first switch K1 and the second switch K2 are both closed, the third switch K3 is opened, and the movable end K41 of the fourth switch K4 is connected to the first fixed end K42, the charger is in a single-phase AC charging mode (as shown in FIG. 3).

The controller 1 (not shown in FIG. 2) is connected to the M-phase high-frequency bridge arm B1, and is configured to:
in a case that the charger is in the single-phase AC charging mode, control a target high-frequency bridge arm to turn off if an absolute value of the voltage of the AC power supply is less than or equal to a first preset voltage; control, if the voltage is greater than the first preset voltage and less than a second preset voltage, an upper bridge arm of the target high-frequency bridge arm to turn off and a lower bridge arm to turn on at a first duty cycle, to discharge a voltage of the AC-side capacitor assembly 2, and control, if the voltage is greater than the second preset voltage, the lower bridge arm of the target high-frequency bridge arm to turn on at a second duty cycle to perform the PFC on the AC power supply when an input voltage of the charger (that is, an output voltage of the AC power supply, correspondingly, the voltage of the AC power supply is an input voltage of the charger) is in a positive half period and the voltage of the AC power supply is greater than zero; and control, if the absolute value of the voltage is greater than the first preset voltage and less than the second preset voltage, the lower bridge arm of the target high-frequency bridge arm to turn off and the upper bridge arm to turn on at the first duty cycle to discharge the voltage of the AC-side capacitor assembly 2, and control, if the absolute value of the voltage is greater than the second preset voltage, the upper bridge arm of the target high-frequency bridge arm to turn on at the second duty cycle to perform the PFC on the AC power supply when the input voltage of the charger is in a negative half period and the voltage of the AC power supply is less than zero.

In the present disclosure, the target high-frequency bridge arm includes one or more high-frequency bridge arms used in the single-phase AC charging mode. Specifically, when the first switch K1 is closed and the second switch K2 and the third switch K3 are both opened, the target high-frequency bridge arm includes a high-frequency bridge arm on a left side of the M-phase high-frequency bridge arms B1. In other words, one target high-frequency bridge arm is arranged. When the first switch K1 and the second switch K2 are both closed, the third switch K3 is opened, and the movable end K41 of the fourth switch K4 is connected to the first fixed end K42, the target high-frequency bridge arm includes the high-frequency bridge arm on the left side and a high-frequency bridge arm in the middle of the M-phase high-frequency bridge arms B1. In other words, two target high-frequency bridge arms are arranged, as shown in FIG. 3.

In addition, the first preset voltage is less than the second preset voltage. The first preset voltage is greater than zero and close to zero. The second preset voltage is less than a maximum voltage of the AC power supply.

The first duty cycle may be less than the second duty cycle, or may be greater than or equal to the second duty cycle, which is not specifically limited in the present disclosure. In an implementation, the first duty cycle is less than the second duty cycle. The second duty cycle is approximately equal to a ratio of an output voltage to an input voltage of the PFC circuit 3.

In this implementation, whether the input voltage of the charger (that is, the input voltage of the charger) is in the positive half period or the negative half period, as long as the absolute value of the voltage of the AC power supply is less than or equal to the first preset voltage, it is considered that the input voltage of the charger crosses zero. In this case, to prevent the current distortion from occurring, the target high-frequency bridge arm is first controlled to turn off. Then when the input voltage of the charger is in the positive half period, the lower bridge arm of the target high-frequency bridge arm is controlled to turn on at a relatively small duty cycle (that is, the first duty cycle, which is less than the second duty cycle) if the voltage is greater than the first preset voltage and less than the second preset voltage. During this period, the upper bridge arm of the target high-frequency bridge arm is always in an off state. In this way, the voltage of the AC-side capacitor assembly may be discharged to the second capacitor C2 at a relatively slow speed through a coil connected to the target high-frequency bridge arm and the lower bridge arm of the target high-frequency bridge arm, so that a leakage current crossing zero smoothly transitions, to avoid the current distortion. When the input voltage of the charger is in the negative half period, the upper bridge arm of the target high-frequency bridge arm is controlled to turn on at the relatively small duty cycle if the absolute value of the voltage is greater than the first preset voltage and less than the second preset voltage. During this period, the lower bridge arm of the target high-frequency bridge arm is always in an off state. In this way, the voltage of the AC-side capacitor assembly may be discharged to the first capacitor C1 at the relatively slow speed through the coil connected to the target high-frequency bridge arm and the upper bridge arm of the target high-frequency bridge arm, so that the leakage current crossing zero smoothly transitions, to avoid the current distortion.

Next, to ensure the original PFC function, when the input voltage of the charger is in the positive half period, the lower bridge arm of the target high-frequency bridge arm is controlled to turn on at the second duty cycle to perform the PFC on the AC power supply if the voltage is greater than the second preset voltage. When the input voltage of the charger is in the negative half period, the upper bridge arm of the target high-frequency bridge arm is controlled to turn on at the second duty cycle to perform the PFC on the AC power supply if the absolute value of the voltage is greater than the second preset voltage.

Although M=3 is exemplified in FIG. 2, a person skilled in the art should understand that a quantity of bridge arms, a quantity of coils, and a quantity of third capacitors in FIG. 2 are merely examples.

In addition, when the input voltage of the charger is in the positive half period or the negative half period, an upper bridge arm and a lower bridge arm of the power frequency bridge arm B2 may be always in the off state. When the upper bridge arm and the lower bridge arm of the power frequency bridge arm B2 are always in the off state, automatic freewheeling may be performed by using a body diode thereof.

Since a turn-on loss of the bridge arm is less than a freewheeling loss of the body diode, to reduce the bridge arm loss of the power frequency bridge arm, the lower bridge arm of the power frequency bridge arm B2 may be enabled to turn on and the upper bridge arm may be enabled to turn off when the input voltage of the charger is in the positive half period, and the upper bridge arm of the power frequency bridge arm B2 may be enabled to turn on and the lower bridge arm may be enabled to turn off when the input voltage of the charger is in the negative half period. Specifically, the above controller 1 is connected to the power frequency bridge arm B2, and is further configured to control the lower bridge arm of the power frequency bridge arm B2 to turn on and the upper bridge arm to turn off when the input voltage of the charger is in the positive half period, and control the upper bridge arm of the power frequency bridge arm B2 to turn on and the lower bridge arm to turn off when the input voltage of the charger is in the negative half period.

In addition, when the target high-frequency bridge arm includes multiple high-frequency bridge arms, to reduce an input current ripple offset and reduce electromagnetic interference of the charger, the multiple high-frequency bridge arms of the target high-frequency bridge arm are alternately turned on. Specifically, the controller 1 is configured to control the upper bridge arm of the target high-frequency bridge arm to turn off and the lower bridge arm to alternately turn on at a preset angle and the first duty cycle, and control the lower bridge arm of the target high-frequency bridge arm to turn off and the upper bridge arm to alternately turn on at the preset angle and the first duty cycle.

Exemplarily, as shown in FIG. 3, a target high-frequency bridge arm includes a high-frequency bridge arm on a left side and a high-frequency bridge arm in the middle of the M-phase high-frequency bridge arms B1. In this case, a preset angle may be 90 degrees.

In addition, when an input voltage of a charger is in a positive half period, to reduce a switching loss of an upper bridge arm of the target high-frequency bridge arm, the above controller 1 is further configured to control the upper bridge arm and a lower bridge arm of the target high-frequency bridge arm to alternately turn on after the lower bridge arm of the target high-frequency bridge arm is continuously turned on at a second duty cycle for preset duration.

Correspondingly, when the input voltage of the charger is in a negative half period, to reduce a switching loss of the lower bridge arm of the target high-frequency bridge arm, the above controller 1 is further configured to control the upper bridge arm and the lower bridge arm of the target high-frequency bridge arm to alternately turn on after the upper bridge arm of the target high-frequency bridge arm is continuously turned on at the second duty cycle for the preset duration.

FIG. 4 is a flowchart of a charger control method according to an exemplary embodiment. As shown in FIG. 4, the above method may include S401 and S402 below.

In S401, a conduction duty cycle of a high-frequency bridge arm of a PFC circuit is dynamically adjusted based on a voltage of an AC power supply to discharge a voltage of an AC-side capacitor assembly and perform PFC on the AC power supply when a charger is in a single-phase AC charging mode.

In S402, a DC outputted from the PFC circuit is inputted to a DC-DC converter, to enable the DC-DC converter to perform voltage conversion on the DC and output the DC to a to-be-charged device.

The charger includes the AC-side capacitor assembly, the PFC circuit, a bus capacitor assembly, and the DC-DC converter. A first end of the PFC circuit is configured to connect to the AC power supply. The bus capacitor assembly includes a first capacitor and a second capacitor. One end of the first capacitor is connected to both a second end of the PFC circuit and one end of the DC-DC converter. Another end of the first capacitor is connected to one end of the second capacitor. Another end of the second capacitor is connected to both a third end of the PFC circuit and another end of the DC-DC converter. One end of the AC-side capacitor assembly is connected to both the AC power supply and the first end of the PFC circuit, and another end thereof is connected to both the first capacitor and the second capacitor.

In the above technical solution, when the charger is in a single-phase AC charging mode, the conduction duty cycle of the high-frequency bridge arm of the PFC circuit is dynamically adjusted based on the voltage of the AC power supply, to discharge the voltage of the AC-side capacitor assembly and perform PFC on the AC power supply, and input the DC outputted from the PFC circuit to the DC-DC converter, to enable the DC-DC converter to perform voltage conversion on the DC and output the DC to a to-be-charged device. In this way, when the charger is in the single-phase AC charging mode, the conduction duty cycle of the high-frequency bridge arm of the PFC circuit is dynamically adjusted, so that the voltage of the AC-side capacitor assembly may be discharged, so as to prevent a current distortion from occurring when the AC crosses zero, and ensure an original PFC function.

Optionally, the PFC circuit includes M-phase high-frequency bridge arms, M coils, and a power frequency bridge arm, and M ≥ 1.

A first bus terminal of the M-phase high-frequency bridge arms is connected to the first capacitor. A second bus terminal of the M-phase high-frequency bridge arms is connected to the second capacitor. First ends of the M coils are connected to midpoints of the M-phase high-frequency bridge arms in a one-to-one correspondence manner. Second ends of the M coils are connected to a live wire of the AC power supply. One end of the power frequency bridge arm is connected to the first bus terminal and the first capacitor. Another end of the power frequency bridge arm is connected to the second bus terminal and the second capacitor. A midpoint of the power frequency bridge arm is configured to connect to a neutral wire of the AC power supply. The AC-side capacitor assembly includes M third capacitors. First ends of the M third capacitors are connected to the second ends of the M coils in a one-to-one correspondence manner. Second ends of the M third capacitors are connected together to form a neutral point. The neutral point is connected to both the first capacitor and the second capacitor through a resistor.

That a conduction duty cycle of a high-frequency bridge arm of a PFC circuit is dynamically adjusted based on a voltage of an AC power supply, to discharge a voltage of an AC-side capacitor assembly and perform PFC on the AC power supply includes the following steps.

A target high-frequency bridge arm is controlled to turn off if an absolute value of the voltage of the AC power supply is less than or equal to a first preset voltage. The target high-frequency bridge arm includes one or more high-frequency bridge arms used in the single-phase AC charging mode.

When an input voltage of the charger is in a positive half period, an upper bridge arm of the target high-frequency bridge arm is controlled to turn off and a lower bridge arm is controlled to turn on at a first duty cycle to discharge the voltage of the AC-side capacitor assembly if the voltage is greater than the first preset voltage and less than a second preset voltage, and the lower bridge arm is controlled to turn on at a second duty cycle to perform the PFC on the AC power supply if the voltage is greater than the second preset voltage. The first preset voltage is less than the second preset voltage.

When the input voltage of the charger is in a negative half period, the lower bridge arm of the target high-frequency bridge arm is controlled to turn off and the upper bridge arm is controlled to turn on at the first duty cycle to discharge the voltage of the AC-side capacitor assembly if the absolute value of the voltage is greater than the first preset voltage and less than the second preset voltage, and the upper bridge arm is controlled to turn on at the second duty cycle to perform the PFC on the AC power supply if the absolute value of the voltage is greater than the second preset voltage.

Optionally, the method further includes the following steps.

The upper bridge arm and the lower bridge arm of the target high-frequency bridge arm are controlled to alternately turn on after the lower bridge arm of the target high-frequency bridge arm is continuously turned on at the second duty cycle for preset duration.

The upper bridge arm and the lower bridge arm of the target high-frequency bridge arm are controlled to alternately turn on after the upper bridge arm of the target high-frequency bridge arm is continuously turned on at the second duty cycle for the preset duration.

Optionally, the target high-frequency bridge arm includes multiple high-frequency bridge arms.

That an upper bridge arm of the target high-frequency bridge arm is controlled to turn off and a lower bridge arm is controlled to turn on at the first duty cycle includes the following step.

The upper bridge arm of the target high-frequency bridge arm is controlled to turn off, and the lower bridge arm is controlled to alternately turn on at a preset angle and the first duty cycle.

That the lower bridge arm of the target high-frequency bridge arm is controlled to turn off and the upper bridge arm is controlled to turn on at the first duty cycle includes the following step.

The lower bridge arm of the target high-frequency bridge arm is controlled to turn off, and the upper bridge arm is controlled to alternately turn on at the preset angle and the first duty cycle.

Optionally, the method further includes the following steps.

When the input voltage of the charger is in the positive half period, the lower bridge arm of the power frequency bridge arm is controlled to turn on, and the upper bridge arm thereof is controlled to turn off.

When the input voltage of the charger is in the negative half period, the upper bridge arm of the power frequency bridge arm is controlled to turn on, and the lower bridge arm thereof is controlled to turn off.

Regarding the charger control method in the embodiments of the present disclosure, specific implementations of steps have been described in detail in the embodiments related to the charger, and details are not described herein.

The present disclosure further provides a vehicle, including the above charger provided according to the present disclosure.

Preferred implementations of the present disclosure are described in detail above with reference to the accompany drawings. However, the present disclosure is not limited to the specific details in the above implementations. Multiple simple variations may be made to the technical solutions of the present disclosure within the scope of the technical concept of the present disclosure, and these simple variations fall within the protection scope of the present disclosure.

In addition, it should be noted that, the specific technical features described in the above specific implementations may be combined in any proper manner in case of no contradiction. To avoid unnecessary repetition, various possible combination manners are not described in the present disclosure.

In addition, various different implementations of the present disclosure may also be combined in different manners without departing from the idea of the present disclosure, and the combinations shall still be regarded as the content disclosed in the present disclosure.

## Claims

1. A charger, comprising:
an alternating current-side (AC-side) capacitor assembly (2), one end of the AC-side capacitor assembly (2) being adapted to connect to an AC power supply (6);
a power factor correction (PFC) circuit (3), a first end of the PFC circuit (3) being configured to connect to the AC power supply (6) and the end of the AC-side capacitor assembly (2);
a direct current-direct current (DC-DC) converter (5);
a bus capacitor assembly (4), the bus capacitor assembly (4) comprising:
a first capacitor (C1), one end of the first capacitor (C1) being connected to both a second end of the PFC circuit (3) and one end of the DC-DC converter (5); and
a second capacitor (C2), one end of the second capacitor (C2) being connected to another end of the first capacitor (C1); and another end of the second capacitor (C2) being connected to both a third end of the PFC circuit (3) and another end of the DC-DC converter (5); and
a controller (1), the controller (1) being connected to both the PFC circuit (3) and the DC-DC converter (5), and being configured to dynamically adjust a conduction duty cycle of a high-frequency bridge arm of the PFC circuit (3) based on a voltage of the AC power supply (6), to discharge a voltage of the AC-side capacitor assembly (2) and perform PFC on the AC power supply (6) when the charger is in a single-phase AC charging mode, and input a DC outputted from the PFC circuit (3) to the DC-DC converter (5), to enable the DC-DC converter (5) to perform voltage conversion on the DC and output the DC to a to-be-charged device; and
the other end of the first capacitor (C1) and the end of the second capacitor (C2) being both connected to another end of the AC-side capacitor assembly (2).

2. The charger according to claim 1, wherein the PFC circuit (3) comprises:
M-phase high-frequency bridge arms (B1), a first bus terminal of the M-phase high-frequency bridge arms (B1) being connected to the first capacitor (C1), and a second bus terminal of the M-phase high-frequency bridge arms (B1) being connected to the second capacitor (C2);
M coils (KM), first ends of the M coils (KM) being connected to midpoints of the M-phase high-frequency bridge arms (B1) in a one-to-one correspondence manner, and second ends of the M coils (KM) being connected to a live wire of the AC power supply (6); and
a power frequency bridge arm (B2), one end of the power frequency bridge arm (B2) being connected to both the first bus terminal and the first capacitor (C1), another end of the power frequency bridge arm (B2) being connected to both the second bus terminal and the second capacitor (C2), and a midpoint of the power frequency bridge arm (B2) being configured to connect to a neutral wire (N) of the AC power supply (6),
wherein M ≥ 1; the AC-side capacitor assembly (2) comprises M third capacitors (C3); first ends of the M third capacitors (C3) are connected to the second ends of the M coils (KM) in a one-to-one correspondence manner; second ends of the M third capacitors (C3) are connected together to form a neutral point; and the neutral point is connected to both the first capacitor (C1) and the second capacitor (C2) through a resistor.

3. The charger according to claim 2, wherein the controller (1) is connected to the M-phase high-frequency bridge arm (B1), and is configured to:
control a target high-frequency bridge arm to turn off if an absolute value of the voltage of the AC power supply is less than or equal to a first preset voltage, wherein the target high-frequency bridge arm comprises one or more high-frequency bridge arms used in the single-phase AC charging mode;
control, if the voltage is greater than the first preset voltage and less than a second preset voltage, an upper bridge arm of the target high-frequency bridge arm to turn off and a lower bridge arm to turn on at a first duty cycle to discharge the voltage of the AC-side capacitor assembly (2), and control, if the voltage is greater than the second preset voltage, the lower bridge arm to turn on at a second duty cycle to perform the PFC on the AC power supply when an input voltage of the charger is in a positive half period, wherein the first preset voltage is less than the second preset voltage; and
control, if the absolute value of the voltage is greater than the first preset voltage and less than the second preset voltage, the lower bridge arm of the target high-frequency bridge arm to turn off and the upper bridge arm to turn on at the first duty cycle to discharge the voltage of the AC-side capacitor assembly (2), and control, if the absolute value of the voltage is greater than the second preset voltage, the upper bridge arm of the target high-frequency bridge arm to turn on at the second duty cycle to perform the PFC on the AC power supply when the input voltage of the charger is in a negative half period.

4. The charger according to claim 3, wherein the controller (1) is further configured to:
control the upper bridge arm and the lower bridge arm of the target high-frequency bridge arm to alternately turn on after the lower bridge arm of the target high-frequency bridge arm is continuously turned on at the second duty cycle for preset duration; and
control the upper bridge arm and the lower bridge arm of the target high-frequency bridge arm to alternately turn on after the upper bridge arm of the target high-frequency bridge arm is continuously turned on at the second duty cycle for the preset duration.

5. The charger according to claim 3 or 4, wherein the target high-frequency bridge arm comprises a plurality of high-frequency bridge arms; and
the controller (1) is configured to control the upper bridge arm of the target high-frequency bridge arm to turn off and the lower bridge arm to alternately turn on at a preset angle and the first duty cycle, and control the lower bridge arm of the target high-frequency bridge arm to turn off and the upper bridge arm to alternately turn on at the preset angle and the first duty cycle.

6. The charger according to any of claims 3 to 5, wherein the controller (1) is connected to the power frequency bridge arm (B2) and is configured to control the lower bridge arm of the power frequency bridge arm (B2) to turn on and the upper bridge arm to turn off when the input voltage of the charger is in the positive half period, and control the upper bridge arm of the power frequency bridge arm (B2) to turn on and the lower bridge arm to turn off when the input voltage of the charger is in the negative half period.

7. A charger control method, comprising:
dynamically adjusting a conduction duty cycle of a high-frequency bridge arm of a PFC circuit based on a voltage of an AC power supply, to discharge a voltage of an AC-side capacitor assembly and perform PFC on the AC power supply when a charger is in a single-phase AC charging mode; and
inputting a DC outputted from the PFC circuit to a DC-DC converter, to enable the DC-DC converter to perform voltage conversion on the DC and output the DC to a to-be-charged device; and
the charger comprising the AC-side capacitor assembly, the PFC circuit, a bus capacitor assembly, and the DC-DC converter; a first end of the PFC circuit being configured to connect to the AC power supply; the bus capacitor assembly comprising a first capacitor and a second capacitor, one end of the first capacitor being connected to both a second end of the PFC circuit and one end of the DC-DC converter, another end of the first capacitor being connected to one end of the second capacitor, and another end of the second capacitor being connected to both a third end of the PFC circuit and another end of the DC-DC converter; and one end of the AC-side capacitor assembly being connected to both the AC power supply and the first end of the PFC circuit, and another end thereof being connected to both the first capacitor and the second capacitor.

8. The method according to claim 7, wherein the PFC circuit comprises M-phase high-frequency bridge arms, M coils, and a power frequency bridge arm; and M ≥ 1,
wherein a first bus terminal of the M-phase high-frequency bridge arms is connected to the first capacitor; a second bus terminal of the M-phase high-frequency bridge arms is connected to the second capacitor; first ends of the M coils are connected to midpoints of the M-phase high-frequency bridge arms in a one-to-one correspondence manner; second ends of the M coils are connected to a live wire of the AC power supply; one end of the power frequency bridge arm is connected to the first bus terminal and the first capacitor; another end of the power frequency bridge arm is connected to the second bus terminal and the second capacitor; a midpoint of the power frequency bridge arm is configured to connect to a neutral wire of the AC power supply; the AC-side capacitor assembly comprises M third capacitors; first ends of the M third capacitors are connected to the second ends of the M coils in a one-to-one correspondence manner; second ends of the M third capacitors are connected together to form a neutral point; and the neutral point is connected to both the first capacitor and the second capacitor through a resistor; and
the dynamically adjusting a conduction duty cycle of a high-frequency bridge arm of a PFC circuit based on a voltage of an AC power supply, to discharge a voltage of an AC-side capacitor assembly and perform PFC on the AC power supply comprises:
controlling a target high-frequency bridge arm to turn off if an absolute value of the voltage of the AC power supply is less than or equal to a first preset voltage, wherein the target high-frequency bridge arm comprises one or more high-frequency bridge arms used in the single-phase AC charging mode;
controlling, if the voltage is greater than the first preset voltage and less than a second preset voltage, an upper bridge arm of the target high-frequency bridge arm to turn off and a lower bridge arm to turn on at a first duty cycle to discharge the voltage of the AC-side capacitor assembly, and controlling, if the voltage is greater than the second preset voltage, the lower bridge arm to turn on at a second duty cycle to perform the PFC on the AC power supply when an input voltage of the charger is in a positive half period, wherein the first preset voltage is less than the second preset voltage; and
controlling, if the absolute value of the voltage is greater than the first preset voltage and less than the second preset voltage, the lower bridge arm of the target high-frequency bridge arm to turn off and the upper bridge arm to turn on at the first duty cycle to discharge the voltage of the AC-side capacitor assembly, and controlling, if the absolute value of the voltage is greater than the second preset voltage, the upper bridge arm to turn on at the second duty cycle to perform the PFC on the AC power supply when the input voltage of the charger is in a negative half period.

9. The method according to claim 8, further comprising:
controlling the upper bridge arm and the lower bridge arm of the target high-frequency bridge arm to alternately turn on after the lower bridge arm of the target high-frequency bridge arm is continuously turned on at the second duty cycle for preset duration; and
controlling the upper bridge arm and the lower bridge arm of the target high-frequency bridge arm to alternately turn on after the upper bridge arm of the target high-frequency bridge arm is continuously turned on at the second duty cycle for the preset duration.

10. A vehicle, comprising the charger according to any of claims 1 to 6.
